# EUROPEAN PATENT APPLICATION

(11) **EP 2 731 396 A1**
(43) Date of publication of application: **14.05.2014**
(21) Application number: 12811709.0
(22) Date of filing: 04.05.2012
(51) Int. Cl.: H04W 76/02, H04W 12/06, G06Q 30/02

(54) **WIRELESS LOCAL AREA NETWORK ACCESS APPARATUS AND OPERATING METHOD THEREOF**

(30) Priority: 08.07.2011 KR 20110067593
(71) Applicant: Lee, Kwang-Min, Gyeonggi-Do 427-733 (KR)
(72) Inventor: Lee, Kwang-Min, Gyeonggi-Do 427-733 (KR)
(74) Representative: Jansen, Cornelis Marinus
(86) International application number: PCT/KR2012/003507
(87) International publication number: WO 2013/008998

(57) **Abstract**

The present invention pertains to a wireless local area network (WLAN) access apparatus and a WLAN access method, and more particularly, to a WLAN access apparatus for determining approval/denial of an access to a mobile communication terminal when access to a WLAN is requested through the WLAN access apparatus and an operating method thereof. Embodiments of the present invention include: a WLAN access apparatus, which has a unique identification (ID), for connecting a wireless network with a mobile communication terminal according to a wireless data exchange protocol; a social network service (SNS) server for providing an SNS; and an authentication server for determining a WLAN access approval according to whether a user of the mobile communication terminal successfully logs into the SNS server when the mobile communication terminal requests for access to a WLAN through the WLAN access apparatus

## Description

### TECHNICAL FIELD

The present invention relates to a wireless local area network (WLAN) access apparatus and a WLAN access method, and more particularly, to a WLAN access apparatus that determines whether to approve an access request of a mobile communication terminal when a WLAN access through a WLAN access apparatus is requested, and an operation method of the WLAN access apparatus.

### BACKGROUND ART

Currently, students and office workers working with notebook computers on for long hours can be easily found in cafes and/or similar places. It has been enabled through generalization of a mobile network environment derived from achievements of the highest wideband Internet penetration rate No. 1 in the world, possession of one or more mobile phones per capita in the whole nation, the high performance and lightness of a notebook computer, the dispersion of ten millions or more smart phones, and the like. Such social phenomena will continuously expand the range instead of remaining as temporary phenomena. Recently, telecommunication companies have presented unlimited-date-rate payment systems and have also published nationwide wireless fidelity (Wi-Fi) access point (AP) installation plans. These movements exhibit competitions between telecommunication companies to cope with the aforementioned change in users.

To conveniently utilize a wireless Internet service in a house, a company, a café, and the like, infrastructures used to access the Internet need to be preferentially secured more than all. Accordingly, many shops and telecommunication companies are expansively installing WLAN APs and the number thereof is also increasing.

However, as disclosed in Korea Laid-Open Publication No. 2007-0015389, when a user is to utilize a WLAN access apparatus, for example, a wireless AP, unless the user is a subscriber of a telecommunication company providing the WLAN access apparatus, the user is limited in using a corresponding service and also needs to go through an authentication procedure by inputting personal information, such as a resident registration number/unique number, and the like.

Accordingly, due to a complex authentication procedure, many users do not use a WLAN access apparatus requiring personal information, and connect to, that is, access the Internet through a mobile communication network, such as a third generation (3G) network, a 4G network, and the like.

However, the access through the mobile communication network such as the 3G network without using the WLAN access apparatus has the following issues.

First, in a case in which many users principally use a mobile communication network, load of a mobile communication network of a telecommunication company increases and a large scale of investments, for example, installing more base stations, is required to decrease the load and accordingly, social costs increases.

Second, regardless of the presence of a resource, for example, a Wi-Fi access of the WLAN access apparatus, available at a high rate, a user uses a low speed mobile communication network.

Third, in view of a shop, even though the shop provides a service of the WLAN access apparatus free of charge, a shop promotion is not effectively performed using the WLAN access apparatus.

### DETAILED DESCRIPTION OF THE INVENTION

### TECHNICAL SUBJECTS

An aspect of the present invention provides a wireless local area network (WLAN) access method of a mobile communication terminal through a WLAN access apparatus. Also, another aspect of the present invention provides an easy WLAN access method of a mobile communication terminal. Also, another aspect of the present invention is to maximally protect personal information when a user performs a WLAN access. Also, another aspect of the present invention provides a method of maximizing an advertising effect about a place in which a WLAN access apparatus is installed.

### TECHNICAL SOLUTIONS

An embodiment of the present invention includes a wireless local area network (WLAN) access system including a WLAN access apparatus configured to have a unique identification (ID) and to perform a wireless network access with a mobile communication terminal based on a wireless data exchange protocol; a social network service (SNS) server configured to provide an SNS; and an authentication server configured to determine whether to approve a WLAN access based on whether a user of the mobile communication terminal successfully logs into the SNS server when the mobile communication terminal requests the WLAN access through the WLAN access apparatus.

A WLAN access apparatus list database (DB) configured to store, for each unique ID of each WLAN access apparatus, WLAN access apparatus installation information that is information on a place in which the WLAN access apparatus is installed is included.

The WLAN access apparatus installation information includes at least one of a unique number of a shop in which the WLAN access apparatus is installed, manager information of the shop, and posting information including information on the place in which the WLAN access apparatus is installed.

When the login into the SNS server is a success, the authentication server is configured to acquire posting information allocated to the access requested WLAN access apparatus from the WLAN access apparatus list DB, to create a posting page on which the posting information is displayed, and to transmit the created posting page to the SNS server.

An embodiment of the present invention includes a WLAN access method including a process of requesting, by a WLAN access apparatus, an authentication server for a WLAN access authentication when a WLAN access request is received from a mobile communication terminal; a login determining process of determining, by the authentication server, whether a user successfully logs in a social network service (SNS) through the mobile communication network; and a WLAN access approving process of determining, by the authentication server, whether to approve the WLAN access through the WLAN access apparatus based on whether the user successfully logs in the SNS.

The login determining process includes a process of providing, by the authentication server, the mobile communication terminal with an SNS selection screen on which logos of a plurality of SNS providers are displayed; a process of receiving, by the authentication server, an SNS login screen from an SNS server configured to provide a selected SNS when the mobile communication terminal selects the predetermined SNS, and providing the received SNS login screen to the mobile communication terminal; a process of receiving, by the mobile communication terminal, an identification (ID) and a password for an SNS login from the user, and transmitting the received ID and password to the authentication server, and transmitting, by the authentication server, the ID and the password to the SNS server; and a process of verifying, by the SNS server, a validity of the received ID and password, and transmitting, to the authentication server, a result of determining whether the SNS login is a success.

When the login into the SNS server is a success, the authentication server acquires, from a database, posting information including information on a place in which the WLAN access apparatus is installed, creates a positing page on which the posting information is displayed, and transmits the created posting page to the SNS server.

### EFFECTS OF THE INVENTION

According to embodiments of the present invention, it is possible to prevent leakage of personal information by determining whether to approve a wireless local area network (WLAN) access using only social network service (SNS) login information. Also, according to embodiments of the present invention, it is possible to perform an easy WLAN access through a WLAN access apparatus. Also, according to embodiments of the present invention, it is possible to achieve a maximized advertisement effect of a shop providing a WLAN access apparatus by automatically posting shop information in response to an access to the Internet through the WLAN access apparatus.

### BRIEF DESCRIPTION OF THE INVENTION

FIG. 1 is a block diagram illustrating a configuration of a wireless local area network (WLAN) access system in which a mobile communication network accesses a network through a WLAN access apparatus according to an embodiment of the present invention.
FIG. 2 is a flowchart illustrating a process of accessing, by a mobile communication terminal, a network through a WLAN access apparatus according to an embodiment of the present invention.
FIG. 3 illustrates a social network service (SNS) login selection screen displayed on a mobile communication terminal according to an embodiment of the present invention.
FIG. 4 illustrates an SNS login input screen displayed on a mobile communication terminal according to an embodiment of the present invention.
FIG. 5 illustrates an SNS login success screen displayed on a mobile communication terminal according to an embodiment of the present invention.
FIG. 6 illustrates an example of posting shop information in an SNS server according to an embodiment of the present invention.

### BEST MODE FOR CARRYING OUT THE INVENTION

Hereinafter, embodiments of the present invention are described in more detail with reference to the accompanying drawings. However, the present invention is not limited thereto and thus, may be configured in various forms. The embodiments are provided only to supplement the disclosure of the present invention and to fully inform a person having ordinary skill in the art of the scope of the invention. Like reference numerals refer to like constituent elements in the drawings.

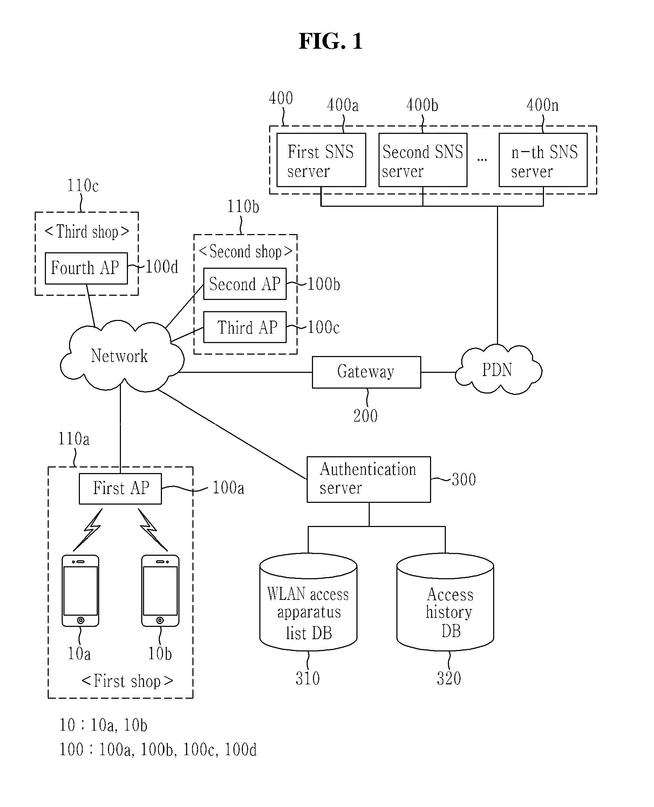

FIG. 1 is a block diagram illustrating a configuration of a WLAN access system in which a mobile communication network accesses a network through a WLAN access apparatus according to an embodiment of the present invention.

Hereinafter, a mobile communication terminal 10 includes a mobile phone, such as a feature phone and a smart phone, a notebook computer, a digital broadcasting terminal, a personal digital assistant (PDA), a portable multimedia player (PMP), navigation, an MP3P layer 3 player (MP3P), and the like. However, a mobile communication terminal to which the present invention is applicable is not limited thereto and may include any type of terminals capable of accessing an external network through an access to a WLAN access apparatus.

Also, a WLAN access apparatus 100 refers to an access point (AP) configured to perform an access through a wireless fidelity (Wi-Fi) network, and may include all of an AP used for an Internet phone in a house, a wireless router AP, an AP provided from a telecommunication company, such as an AP of a hot spot zone, and the like.

The WLAN access apparatus 100 (a first AP 100a, a second AP 100b, a third AP 100c, and a fourth AP 100d) may be installed in each specific place, such as a shop, to be in a singular form or in a plural form. For example, the first AP 100a may be installed in a first shop 110a, the second AP 100b and the third AP 100c may be installed in a second shop 110b, and the fourth AP 100d may be installed in a third shop 110c.

Each WLAN access apparatus 100 may be identified on a network using a Media Access Control (MAC) address or a unique identification (ID) set for each WLAN access apparatus 100. Also, each WLAN access apparatus 100 includes a wireless transceiver configured to perform radio frequency (RF) communication with the mobile communication terminal 10. To this end, the WLAN access apparatus 100 performs near field communication by applying a wireless data exchange protocol such as an Institute of Electrical and Electronics Engineers (IEEE) 802.1x protocol.

A gateway 200 refers to a network protocol conversion apparatus configured to establish a communication path between a network connected with the WLAN access apparatus and a packet data network (PDN) connected with an SNS server. Each network transmits data based on a protocol distinguished from another network and thus, a data transmission method differs for each network. Accordingly, the gateway 200 provides such a network conversion protocol.

An SNS server 400 is connected to the PDN to thereby provide an SNS. For example, the SNS server 400 refers to a server configured to provide an SNS that enables information to be shared between members of the SNS such as Twitter, Facebook, and me2day. The SNS server is provided in a form of each SNS server (a first SNS server 400a, a second SNS server 400b, ..., an n-th SNS server 400n) operated for each service provider, for example, each IPS. A user needs to perform a login procedure into a corresponding SNS server in order to utilize a corresponding SNS using the SNS server 400.

A WLAN access apparatus list database (DB) 310 stores a list of unique IDs, for example, MAC addresses, of WLAN access apparatuses managed by an authentication server 300. Also, the WLAN access apparatus list DB 310 stores, for each unique ID, WLAN access apparatus installation information including a unique number of a shop in which a corresponding WLAN access apparatus is installed, a logo of the shop, manager information, posting information, and the like. Contents to be stored in the WLAN access apparatus list DB are expressed by the following Table 1.

**[Table 1]**

| WLAN access apparatus | Unique ID | Unique No. of shop | Log of shop | Manager info | Posting info |
|---|---|---|---|---|---|
| First WLAN access apparatus | a00cf001 | 214-08-00001 | Starbucks | Gildong HONG, Seoul, 010-3333-5555 | Name of shop, logo of shop, location of shop, contact number of shop, event info, and coupon info |
| Second WLAN access apparatus | e0fb5400 | 434-13-39003 | Caffebene | Miae SIM, Seoul, 010-5555-9999 | Name of shop, logo of shop, location of shop, contact number of shop, event info, and coupon info |
| Third WLAN access apparatus | 01da9031 | 214-24-03985 | JEON's coffee | Chulsoo KIM, Seoul, 010-2222-7777 | Name of shop, logo of shop, location of shop, contact number of shop, event info, and coupon info |

The unique number of the shop stores information, for example, a corporate registration number, used to identify the shop in which the WLAN access apparatus is installed. The logo of the shop refers to a unique logo of the shop, and the manager information refers to a manager name, a contact number, an address, and the like of the corresponding shop.

The posting information refers to information associated with the shop in which the WLAN access apparatus is installed, and is automatically posted to a corresponding SNS (on a Twit page in the case of connecting to a Twitter service). The posting information may include at least one of a name of the shop, a logo of the shop, a location of the shop location, a contact number of the shop, event information, coupon information, and the like. The event information includes an event, for example, 1+1 gift event and a sale event, which is ongoing in the corresponding shop. The coupon information includes a coupon available in the shop in which the WLAN access apparatus is installed.

An access history DB 320 refers to a DB configured to store an access history to an SNS. In a case in which the mobile communication terminal uses the wireless network by completing an SNS access approving procedure through each WLAN access apparatus, the access history DB 320 stores SNS access contents for each WLAN access apparatus. The access history DB 320 may be used for a variety of marketing in the future, and may also be used to advertise a corresponding shop by verifying an SNS use rate for each shop.

The WLAN access apparatus list DB 310 and the access history DB 320 are provided in an internal memory or an external DB. The memory may refer to a module capable of performing input/output of information, such as a hard disk, a flash memory, a compact flash card, a secure digital (SD) card, a smart media (SM) card, a multi-media card (MMC), a memory stick, and the like and thus, may be provided in an apparatus or may be provided in a separate apparatus.

The authentication server 300 performs a WLAN access authentication for determining whether a corresponding mobile communication terminal has a right to access a WLAN, in response to a WLAN access request received from the predetermined mobile communication terminal 10 through a WLAN access apparatus. The WLAN access authentication is performed by determining whether a login into the SNS server is a success.

Also, when an SNS login is a success, the authentication server 300 transmits a network access approval message to the WLAN access apparatus used for the access. In response to the network access approval message, the WLAN access apparatus assigns a network access right to the mobile communication terminal having succeeded in the SNS login and thereby approves the network use.

Also, when the SNS login is a success, the authentication server 300 performs posting with respect to the corresponding SNS server. The authentication server 300 receives, from the WLAN access apparatus list DB, posting information that is allocated to the WLAN access apparatus used for the connection and thereby stored, and posts the corresponding posting information by transmitting the corresponding posting information to the SNS server. For example, when a first user connects to Twitter through the first WLAN access apparatus 100a installed in the first shop 110a that is a Gangnam branch having logo "JEON's coffee" through a first mobile communication terminal 10a, 10b owned by the first user, the authentication server 300 twits, to the Twitter, that the first user is currently located in the Gangnam branch of "JEON's coffee", a logo, a contact number, a location, event information, and coupon information of the corresponding Gangnam branch of "JEON's coffee", and the like. Accordingly, followers that are SNS neighbors of the first user may view the twitted location, event information, and coupon information on the Gangnam branch of "JEON's coffee" in runtime, which may be used for shop promotion. For reference, to protect a user privacy, only shop information may be posted without posting that the first user has accessed at the Gangnam branch of "JEON's coffee".

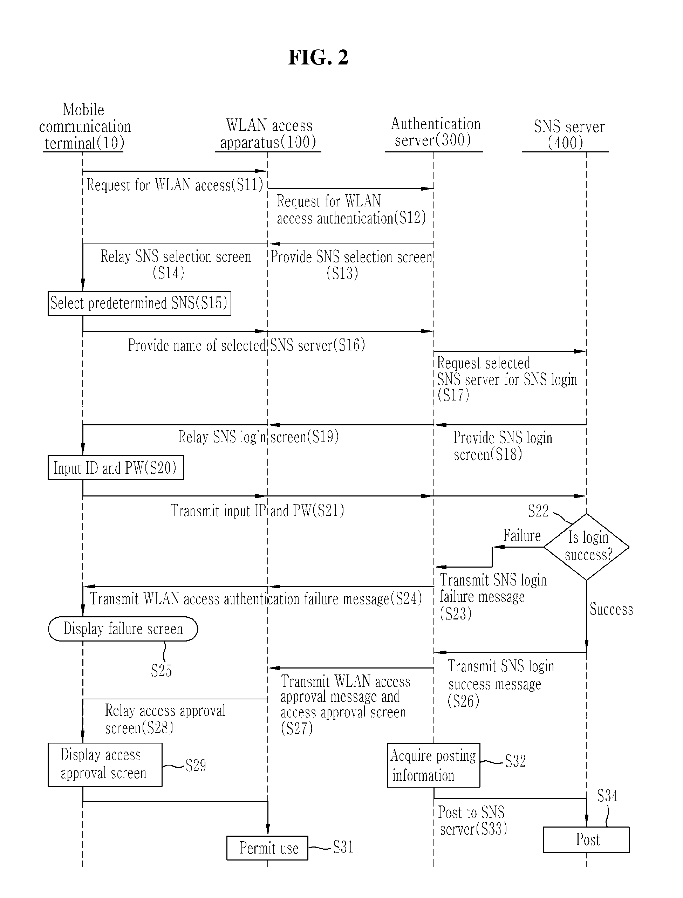

FIG. 2 is a flowchart illustrating a process of accessing, by a mobile communication terminal, a network through a WLAN access apparatus according to an embodiment of the present invention.

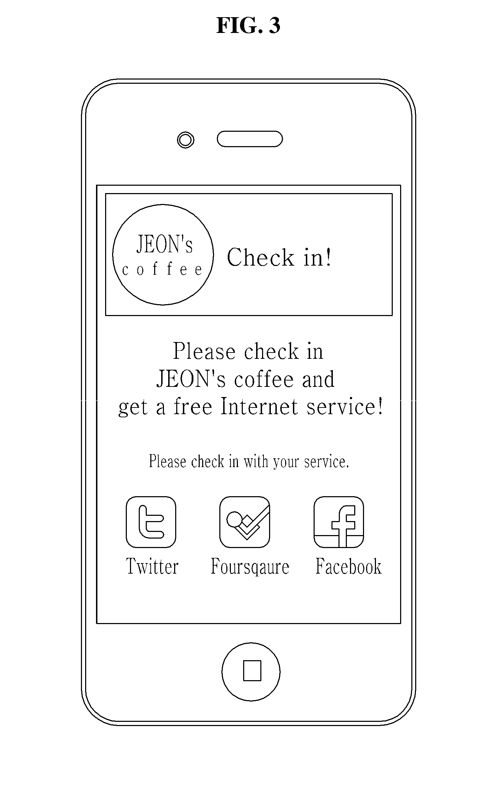

When a mobile communication terminal 10 requests a WLAN access through a predetermined WLAN access apparatus (S11), a WLAN access apparatus 100 requests an authentication server 300 for a WLAN access authentication as to whether to approve the WLAN access (S12). In response to the authentication request, the authentication server 300 provides an SNS login selection screen of FIG. 3 to the corresponding mobile communication terminal (S13) and the WLAN access apparatus 100 relays the SNS login selection screen to the mobile communication terminal 100 (S14). The SNS login selection screen refers to a screen for selecting a plurality of SNS providers, and displays an SNS logo, such as Twitter and Facebook, for example. Hereinafter, a case in which only a relay operation is performed between the WLAN access apparatus 100 and the authentication server 300 may not be particularly described.

When a user selects a predetermined SNS logo on the SNS login selection screen (S15), the mobile communication terminal 100 provides an SNS server name corresponding to the selected SNS logo to the authentication server 300 (S16). The authentication server 300 requests a corresponding SNS server for an SNS login (S17). When the selected SNS server 400 provides an SNS login input screen to the authentication server 300 in response to the request for the SNS login (S18), the authentication server 300 relays the SNS login input screen to the mobile communication terminal through the WLAN access apparatus (S19). For reference, the authentication server has an IP address of each SNS server and thus, may automatically acquire a login input screen through an access to a corresponding IP address.

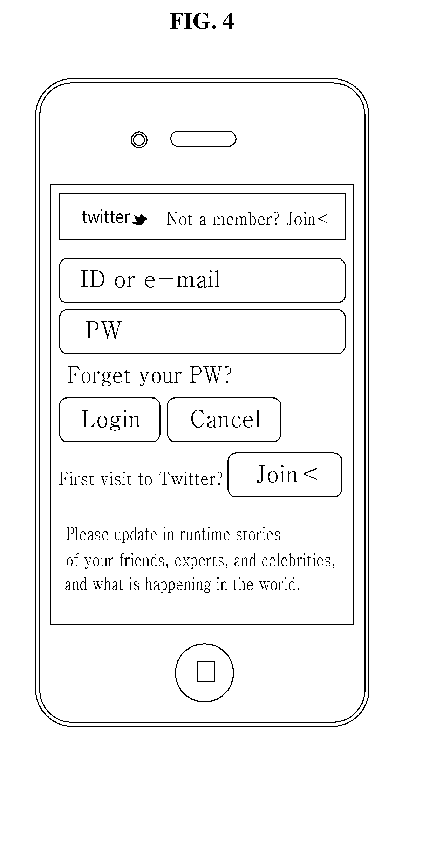

The mobile communication terminal 10 displays the selected SNS login input screen of FIG. 4, and the user inputs, on the SNS login input screen, a user ID and a password used to subscribe to the corresponding SNS server (S20).

The user ID and the password input on the SNS login input screen are transmitted to the SNS server 400 through the authentication server (S21). For reference, an ID and a password to be transmitted are relayed and thereby transmitted as preset encrypted values and thus, the security thereof is maintained.

The SNS server 400 receives the user ID and the password and determines whether the user corresponding to the received ID and password has a login right (S22). When the login fails due to mismatching of the ID and the password, the SNS server 400 transmits an SNS login failure message to the authentication server (S23). The authentication server 300 provides a WLAN access authentication failure message and a login failure screen to the WLAN access apparatus (S24).

The WLAN access apparatus provides the SNS login failure screen to the mobile communication terminal and also continuously disallows the WLAN access of the corresponding mobile communication terminal. In addition to displaying the SNS login failure screen (S25), the SNS login selection screen or the SNS login input screen may be provided again in response to a user request.

Meanwhile, when the SNS login succeeds due to matching of the ID and the password, the SNS server 400 transmits an SNS login success message to the authentication server 300 (S26).

In response to the SNS login success message, the authentication server 300 transmits, to the WLAN access apparatus 100, a WLAN access approval message approving a network access through the WLAN access apparatus and an access approval screen (S27).

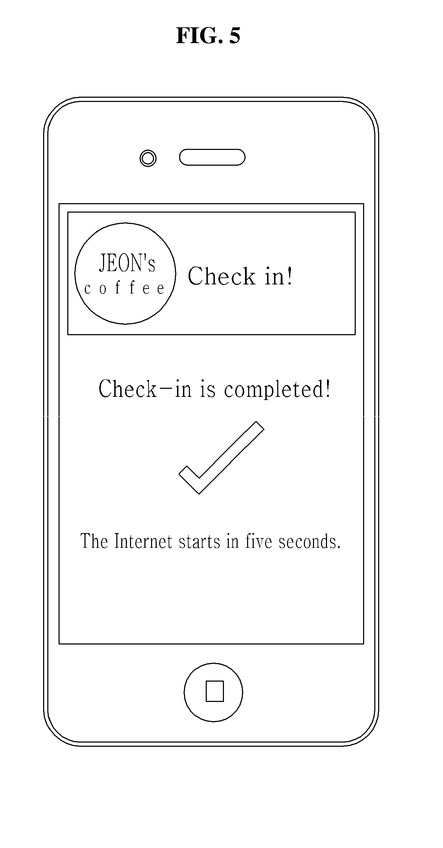

Also, the WLAN access apparatus 100 relays and thereby transmits the access approval screen to the mobile communication terminal (S28). The mobile communication terminal 10 receives and displays the access approval screen of FIG. 5 (S29), and informs the user that the wireless network access is approved. After displaying the access approval screen for a predetermined amount of time, the mobile communication terminal 10 displays an Internet access window to thereby enable the user to use the Internet. In response to a request for using the WLAN from the mobile communication terminal based on the access approval message (S30), the WLAN access apparatus 100 permits the WLAN access (S31).

For reference, when the login is approved by the SNS server due to matching of the ID and the password, the SNS server 300 transmits the SNS login success message to the authentication server (S26). Here, the SNS login success message may be provided in a text message form. According to another embodiment, an initial SNS screen itself may be used as the SNS login success message. The initial SNS screen refers to a general screen provided in response to the login success.

The initial SNS screen itself may be used as the SNS login success message because the authentication server is capable of verifying whether the login is a success or a failure by analyzing data of the initial SNS screen. That is, the initial SNS screen provided in response to the login success is configured using a script language such as a Hypertext Markup Language (HTML) and thus, may verify whether the login is a success by extract contents of a login relevant field of the script language of an HTML and by verifying the extracted contents. For example, when the SNS login is a success, a main SNS posting screen is displayed as the initial SNS screen together with the user ID. Conversely, when the SNS login is a failure, an ID and password re-input screen is displayed instead of displaying the initial SNS screen. Accordingly, whether the login is a success may be verified by analyzing the script language that configures such a screen.

Meanwhile, when the SNS login success message is received from the SNS server in response to the SNS login success (S26), the authentication server 300 acquires, from the WLAN access apparatus list DB, posting information that is allocated to the WLAN access apparatus used for the access (S32).

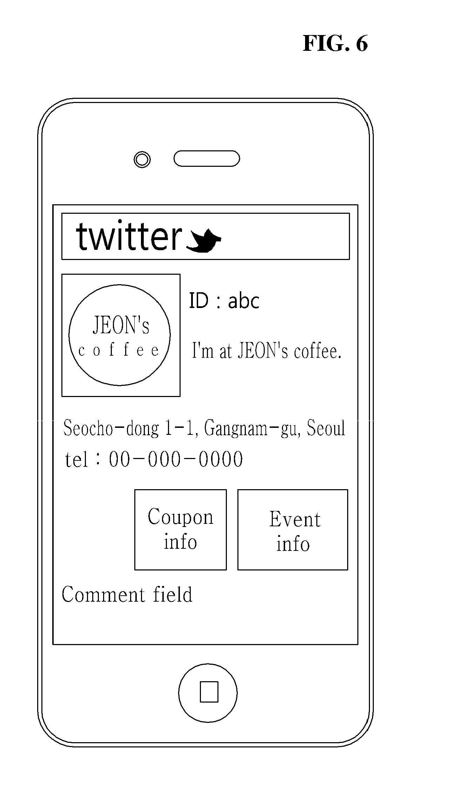

The authentication server 300 provides the posting information to the SNS server based on the posting information (S33), thereby enabling posting to be performed in the SNS server (S34). FIG. 6 illustrates an example of posting shop information in an SNS server according to an embodiment of the present invention. Referring to FIG. 6, information of a shop in which a WLAN access apparatus connected through a wireless network is installed, that is, a logo, a location, a contact number, coupon information, event information, and the like, are displayed. SNS neighbors, for example, followers of Twitter may verify posted information in runtime. Accordingly, in view of a shop, it is possible to maximize an advertising effect.

Also, the authentication server 300 may store, in an access history DB, a user history of a mobile communication terminal that accesses the WLAN access apparatus, and may use the access history DB when calculating statistics later.

Meanwhile, in the case of a WLAN access according to the related art, login is performed using personal information such as a residence registration number and a name and thus, leakage of personal information arose as an issue. However, according to the present invention, personal information may be protected by performing a WLAN access using only login information of an SNS that uses a mail ID as a login ID.

Also, in the case of an Internet access through the WLAN access apparatus, the authentication server automatically posts and thereby publishes shop information and thus, it is possible to achieve a maximized advertising effect of a shop providing the WLAN access apparatus.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A wireless local area network (WLAN) access system, comprising:
a WLAN access apparatus configured to have a unique identification (ID) and to perform a wireless network access with a mobile communication terminal based on a wireless data exchange protocol;
a social network service (SNS) server configured to provide an SNS; and
an authentication server configured to determine whether to approve a WLAN access based on whether a user of the mobile communication terminal successfully logs into the SNS server when the mobile communication terminal requests the WLAN access through the WLAN access apparatus.

2. The WLAN access system of claim 1, comprising:
a WLAN access apparatus list database (DB) configured to store, for each unique ID of each WLAN access apparatus, WLAN access apparatus installation information that is information on a place in which the WLAN access apparatus is installed.

3. The WLAN access system of claim 2, wherein the WLAN access apparatus installation information comprises at least one of a unique number of a shop in which the WLAN access apparatus is installed, manager information of the shop, and posting information comprising information on the place in which the WLAN access apparatus is installed.

4. The WLAN access system of claim 3, wherein the posting information comprises at least one of a name of the shop in which the WLAN access apparatus is installed, a logo of the shop, a location of the shop, a contact number of the shop, event information, and coupon information.

5. The WLAN access system of claim 3, wherein the authentication server is configured to approve a wireless network access of the mobile communication terminal through the WLAN access apparatus when the login into the SNS server is a success, and to decline the wireless network access of the mobile communication terminal through the WLAN access apparatus when the login into the SNS server is a failure.

6. The WLAN access system of claim 5, wherein when the login into the SNS server is a success, the authentication server is configured to acquire posting information allocated to the access requested WLAN access apparatus from the WLAN access apparatus list DB, to create a posting page on which the posting information is displayed, and to transmit the created posting page to the SNS server.

7. The WLAN access system of claim 1, comprising:
an access history DB configured to store an access history of the mobile communication terminal to a wireless network through the WLAN access apparatus.

8. A wireless local area network (WLAN) access method, comprising:
a process of requesting, by a WLAN access apparatus, an authentication server for a WLAN access authentication when a WLAN access request is received from a mobile communication terminal;
a login determining process of determining, by the authentication server, whether a user successfully logs in a social network service (SNS) through the mobile communication network; and
a WLAN access approving process of determining, by the authentication server, whether to approve the WLAN access through the WLAN access apparatus based on whether the user successfully logs in the SNS.

9. The method of claim 8, wherein the login determining process comprises:
a process of providing, by the authentication server, the mobile communication terminal with an SNS selection screen on which logos of a plurality of SNS providers are displayed;
a process of receiving, by the authentication server, an SNS login screen from an SNS server configured to provide a selected SNS when the mobile communication terminal selects the predetermined SNS, and providing the received SNS login screen to the mobile communication terminal;
a process of receiving, by the mobile communication terminal, an identification (ID) and a password for an SNS login from the user, and transmitting the received ID and password to the authentication server, and transmitting, by the authentication server, the ID and the password to the SNS server; and
a process of verifying, by the SNS server, a validity of the received ID and password, and transmitting, to the authentication server, a result of determining whether the SNS login is a success.

10. The method of claim 8, wherein the WLAN access approving process approves a wireless network access of the mobile communication terminal through the WLAN access apparatus when the login into the SNS server is a success, and declines the wireless network access of the mobile communication terminal through the WLAN access apparatus when the login into the SNS server is a failure.

11. The method of claim 10, wherein when the login into the SNS server is a success, the authentication server acquires, from a database, posting information comprising information on a place in which the WLAN access apparatus is installed, creates a positing page on which the posting information is displayed, and transmits the created posting page to the SNS server.

12. The method of claim 11, wherein the posting information comprises at least one of a name of a shop in which the WLAN access apparatus is installed, a logo of the shop, a location of the shop, a contact number of the shop, event information, and coupon information.
